# EUROPEAN PATENT SPECIFICATION

(11) **EP 1 542 589 B1**
(45) Date of publication and mention of the grant of the patent: **24.04.2013**
(21) Application number: 03748379.9
(22) Date of filing: 17.09.2003
(51) Int. Cl.: A61B 6/00

(54) **DISPLAY OF IMAGE DATA INFORMATION**
ANZEIGE VON BILDDATENINFORMATION
AFFICHAGE DE DONNEES D'IMAGES

(30) Priority: 19.09.2002 US 247120
(43) Date of publication of application: 22.06.2005
(73) Proprietor: Koninklijke Philips Electronics N.V., 5621 BA Eindhoven (NL)
(72) Inventor: BREEUWER, Marcel, NL-5656 AA Eindhoven (NL); MUTHUPILLAI, Raja, NL-5656 AA Eindhoven (NL)
(74) Representative: Verweij, Petronella Danielle
(86) International application number: PCT/IB2003/003988
(87) International publication number: WO 2004/026140

(56) References cited:
- WO-A-02/41780
- US-A- 5 871 013
- US-B1- 6 173 201

## Description

The invention relates to a method of producing a combined image comprising information from a first diagnostic image and from a second diagnostic image, where areas indicating a condition of interest are identified in the second diagnostic image.

First-pass myocardial perfusion imaging and analysis identifies regions within the myocardium tissue that are insufficiently supplied by blood. As such it provides useful information to the physician that aids him or her in making a reasoned diagnosis taking all other factors into consideration. The general method used to perform such imaging is broadly similar across imaging modalities. A contrast agent is injected and ECG-triggered images are acquired. The images may, for example, be ECG-triggered magnetic resonance images but the method is also applicable to other modalities. The set of acquired images are used to dynamically view the passage of the contrast agent through the myocardium. The contrast agent intensity in the myocardium as a function of time (the time-intensity profile) is a measure for how well blood flows from the coronary arteries into the myocardium. Various parameters have been proposed to quantify the degree of perfusion based on these time-intensity profiles, such as the maximum upslope and the time-to-peak. First-pass perfusion imaging is often performed both when the heart is at rest and when it is stressed. The myocardial perfusion reserve index, i.e. the ratio of the maximum upslope at stress and at rest, is considered to be a good indicator of the degree of perfusion.

First-pass perfusion analysis does not supply information about the viability of myocardial tissue that is insufficiently perfused. This information is supplied by late-enhancement (also denoted as delayed-enhancement) perfusion imaging which is also based on the injection of a contrast agent. Images are acquired after a delay of 15-25 minutes and show an increased uptake of the contrast agent in the non-viable, or necrotic, tissue. At present these two types of data are separately visualized and analyzed.

US 5,871,013 A describes registering a functional image to a structural diagnostic image. It is said that once this matching is accomplished, a mapping between the images can be defined. The mapping is used to transform one image so that it can be superimposed over the other image. Also, it is mentioned that many image processing techniques are applicable, e.g., image subtraction, rapid flipping of two or more images, superpositioning of outlines of an active area from one image to the other, and pseudo-coloring of different areas.

It is an object of the invention to produce an image which provides more accurate and relevant data to the physician and which is simpler to understand.

This is achieved according to the invention by a method characterized in that the first diagnostic image and the second diagnostic image are registered and the areas indicating a condition of interest in the second diagnostic image are mapped onto the equivalent areas in the first diagnostic image.

The method of the invention, when applied to myocardial imaging allows the advantageous simultaneous analysis of both first pass and late enhancement images.

An embodiment by which this can be achieved is now described and produces a combination of 1st-pass perfusion and late-enhancement myocardial magnetic resonance images. The 1st-pass perfusion images are acquired and analyzed with a commonly used approach, e.g. for each point or region in the myocardium the ratio of inflow of contrast agent at stress and rest is calculated. So for example a sector map may be laid over the 2 dimensional representations of myocardium in each slice taken from the 3 dimensional image data set and ratios calculated for each sector.

The late-enhancement images are analyzed so that the points or segments containing necrotic tissue are detected. This can also be done on a sector by sector basis. Subsequently, the first-pass perfusion and late-enhancement images are non-rigidly registered, so that a geometrical correspondence is available for all locations in the myocardium. A non-rigid registration constructs a correspondence between the points in one image and the spatially equivalent points in another image, for example in this case it produces an equivalence between the points representing equivalent tissue in two cardiac image slices, and in doing so takes small local deformations in the two images into account. The detected necrotic points or segments in the late enhancement study are then used either as a mask, or are used to construct a mask, which is then mapped onto the 1st-pass perfusion images. In doing so, the quantitative analysis results can be associated with each other by means of the application of the derived registration transformation, so that the 1st-pass quantitative analysis results in the necrotic areas can be ignored.

It is also possible that the late-enhancement images may be analyzed first and used to produce a mask of necrotic areas which mask is then applied to the first pass perfusion images. The first pass perfusion images are then analyzed to produce results such as the myocardial perfusion reserve index, but only for the areas which have not been masked out by the mask created from the late-enhancement images. In each case the point about the mask is to identify or remove areas from the first pass analysis which will produce analysis results which are unreliable.

The invention as described allows creation of a composite image which provides important and useful information to the diagnostician who is then assisted in ultimately making a diagnosis. It is confusing and often difficult for the viewing physician to codependantly examine the different images showing essentially different types of information. When the full set of images are shown the clinician may be presented with a full set of images slices representing not only the first pass rest and stress images but also the ratio images providing vital information about the myocardial perfusion and also a full set of late enhancement data indicating areas of necrotic tissue.

First-pass perfusion analysis generally works well for myocardial areas that are still viable, that is, those areas of tissue which are not yet necrotic. For such non-necrotic areas, the ratio of the inflow at stress and at rest, as calculated for example by the myocardial perfusion reserve index, is a good indicator for how well these particular areas are perfused. However, for necrotic areas of tissue, the calculated index results are not diagnostically dependable. Unfortunately, it may not be readily apparent from the first pass perfusion images that the results are not suitable to support an accurate diagnosis. It may be that he inflow of first pass contrast agent into the necrotic areas of tissue is low both at rest and at stress. The ratio of these inflows calculated using the myocardial perfusion reserve index for individual pixels or averaged over individual segments can therefore be the ratio of low values to other similarly low values and so take a wide range of unpredictable resultant values, not always representative of the physiological function of that particular volume or section of tissue. In conventionally used 1st-pass perfusion analysis methods this is not taken into account. Alternatively it is sometimes found that some inflow of contrast agent still occurs into the necrotic tissue, and this inflow can be quite substantial. This may particularly occur in the case where a previously occluded coronary artery has been treated. This arterial inflow of contrast agent into areas of necrotic tissue can produce a spurious or phantom uptake reading. Calculation of the myocardial perfusion reserve index in this case produces a numerical result which is highly unrepresentative of the actual functioning of the tissue and which may indicate viable tissue. First pass perfusion analysis alone is unable to indicate the unreliability of the result in these cases. The method of the invention as described reintroduces diagnostic meaning to these areas of tissue in the images by mapping areas or segments representing this necrotic tissue onto images representing the first pass perfusion, so allowing those areas to be highlighted or identified either to the user or to the image analysis program being used.

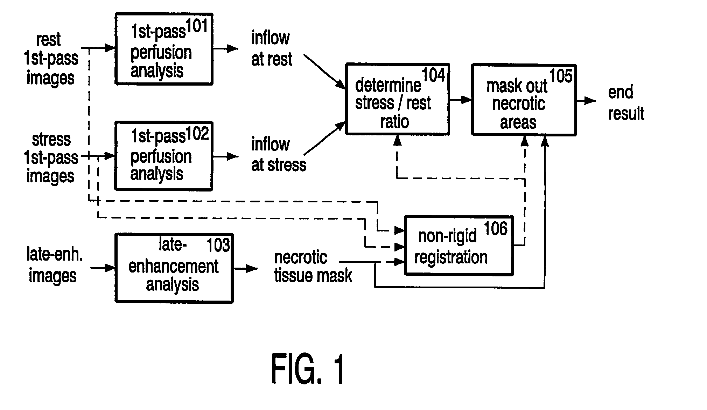

- Fig. 1: shows a flow diagram of how the invention can be used in practice.

The set of images from the initial rest first pass study are subjected to first pass perfusion analysis 101. The set of images from the stress first pass study are also subjected to first pass perfusion analysis 102. Both sets of analyzed data are now used to create a stress/rest ratio image 104. Image data from a late-enhancement study is analyzed 103 according to the invention and a mask of pixels representing areas of high uptake is calculated. A non-rigid registration 106 is performed between all sets of data and the mask is applied to the image representing the stress/rest ratio data 105. Alternatively, the registration of the images can be performed by first performing a rigid registration to take into account any global shift or rotation between the images, and then performing a non-rigid registration to take into account any further local deformation between the images. This may be advantageous for example in the case when the patient has moved slightly between the first pass images and the late-enhancement study, for example by translating or shifting him or herself up or down the patient couch. An initial rigid registration to take account of the global shift between the images can be followed by a non-rigid registration to take any further local deformation into account. If a non-rigid registration is not required, then the method can be performed using a rigid registration.

The invention provides first pass perfusion images in which necrotic areas of the myocardium are rendered in such a manner that they are made particularly well visible. It is the areas in the second diagnostic image, in this case the late-enhancement image, representing the necrotic areas which are the areas representing the condition of interest in the second diagnostic image. These areas are mapped onto the first diagnostic image, in this case a first pass perfusion image.

The detection of the pixels which represent high uptake tissue in the late enhancement images can be achieved using an automatic detection algorithm. This is done according to an embodiment of the invention using thresholding which utilizes an automatically derived threshold, comprising the following steps:
- all slices are rescaled to the range from 0 to 255 (maximum value is mapped to 255),
- for each slice the histogram of pixel values in the myocardium is determined,
- this histogram is severely smoothed to take out the noise,
- the position ppeak and value hpeak of the first significant peak in the smoothed histogram are determined (searching from the low to the high pixel values),
- the position psigma in the histogram at which the value hsigma is 0.5 times the peak value is determined,
- the standard deviation sigma is calculated by taking the absolute value of (ppeak - psigma),
- the enhanced-tissue detection threshold is calculated: t = ppeak + 2.5 * sigma, binary thresholding of all pixels in the myocardium is performed using the threshold t.

This means that each pixel is examined to see if the pixel value is above or below the threshold value. Contrast agents commonly used in late-enhancement studies produce increased uptake in areas of necrotic myocardial tissue thus the pixels whose pixel value resides above the threshold are the pixels which contribute to the mask which is applied to the first pass perfusion images. It is equally possible to define a protocol in which the binary thresholding comprises examining each pixel value to see if it is above the threshold as opposed to below or equal to the threshold, adding to the mask those pixels whose values are above, or alternatively, to below the threshold as opposed to above or equal to the threshold. In the latter case those pixels whose values are above or equal to the threshold are added to the mask.

The value of 2.5 used in the calculation of advanced tissue detection threshold could in fact be any value which lies in a range of say between 1.5 and 4. The value chosen is dependent on the amount of noise in the images. The greater the amount of noise the greater the value, so that in a particularly noisy image the most useful value might be derived from within a range of 3 to 4, but in a particularly clean, noise free image might even be as low as 1.3, but might more normally lie within a range of 1.5 to 2.5. However, favorable results have been achieved with a value derived from a range of 1.5 to 3 and particularly useful results with the value of 2.5. In practice, because the value depends on the amount of noise resulting in the images it depends on the physical conditions and parameters of the acquisition as well as the parameters of the analysis protocol and so the value can be chosen or set up when the protocol is set up and used for subsequent analysis sessions.

The rescaling of the slices to the range from 0 to 255 is actually the rescaling of the intensity level values of the pixels in the slices and as such is an arbitrary value. The value 255 is particularly useful because it can be represented by an 8 bit scale and represents a reasonable balance between having too low a value and having too few intensity level values to adequately present the information in the images, or having too high a value and presenting too much information to the user. Other values instead of 255 could also be used.

This method is also applicable to other methods of assessing the myocardium and can be used in ultrasound imaging and other modalities such as CT, PET, nuclear medicine and ultrasound.

An embodiment of the invention has been described in terms of an application to the analysis of ischemic heart disease but the invention can also be applied to other areas of imaging when pharmaceutical agents are used. The invention can be advantageously used whenever the pharmacokinetics of an agent used for imaging breaks down under some pathological process, and that breakdown can be diagnosed or predicted using the pharmacokinetics of another agent. The pathology causing the breakdown or otherwise altered pharmacokinetics of the first agent is the condition of interest shown by the second agent. The mapping of this imaging information indicating this condition of interest onto the image of the first agent adds vital information to this image. The method is particularly useful when the pharmacokinetic breakdown of the first agent is occult or difficult to verify using the image of that first agent alone.

The invention also relates to a computer program, comprising instructions for the display of images.

A computer program characterized in that it also comprises instructions to produce a combined image comprising information from a first diagnostic image and from a second diagnostic image, where areas indicating a condition of interest are identified in the second diagnostic image, where the first diagnostic image and the second diagnostic image are registered, and the areas indicating a condition of interest in the second diagnostic image are mapped onto the equivalent areas in the first diagnostic image has the advantage that it can perform the invention.

The invention also relates to a workstation, configured for the purposes of displaying images.

A workstation characterized in that it also comprises instructions to produce a combined image comprising information from a first diagnostic image and from a second diagnostic image, where areas indicating a condition of interest are identified in the second diagnostic image, where the first diagnostic image and the second diagnostic image are registered, and the areas indicating a condition of interest in the second diagnostic image are mapped onto the equivalent areas in the first diagnostic image has the advantage that it can perform the invention.

## Claims

1. A method of producing a combined image comprising information from a first diagnostic image and from a second diagnostic image, comprising:
- identifying areas indicating a condition of interest in the second diagnostic image,
- registering the first diagnostic image and the second diagnostic image,
- mapping the areas indicating the condition of interest in the second diagnostic image onto equivalent areas in the first diagnostic image,
- **characterized by** the mapping comprising (i) constructing a mask from pixels identified as relating to the areas indicating the condition of interest in the second diagnostic image, and (ii) applying the mask to the first diagnostic image for producing as the combined image the first diagnostic image having the equivalent areas masked out so as to remove said areas from a subsequent analysis of the combined image.

2. A method as claimed in claim 1, **characterized in that**, the areas indicating a condition of interest are areas of necrotic tissue.

3. A method as claimed in claim 1, wherein the second diagnostic image comprises tissue with an uptake of a contrast agent, the areas indicating a condition of interest in the second diagnostic image are areas of increased uptake of the contrast agent, and the method further comprises identifying said areas by identifying areas containing pixels whose intensity values are at least a threshold value.

4. A method as claimed in claim 3, **characterized in that**, the threshold value is calculated by:
computing a histogram of the pixel values defined by the region of interest, which histogram showing a first significant peak of intensity values,
applying a low pass filter to the histogram,
calculating the intensity value of the first significant peak in the histogram,
calculating a deviation value for the first significant peak,
calculating a threshold value as a function of the intensity value of the first significant peak and the deviation value.

5. A method as in claim 4, **characterized in that**, the deviation value is calculated by taking the absolute difference between the positional values of the first significant peak in the histogram the intensity value which is half that of the intensity value of the first significant peak.

6. A method as in claim 4, **characterized in that**, the threshold value is calculated by taking the sum of the intensity value of the first significant peak and at least 2 times the value of the deviation value, and preferably 2.5 times the value of the deviation value.

7. A method as in claim 1, **characterized in that**, the first diagnostic image is a cardiac magnetic resonance image displaying first pass perfusion data and the second diagnostic image is a late enhancement cardiac magnetic resonance image.

8. A method as in claim 1, **characterized in that**, the first diagnostic image is a cardiac magnetic resonance image displaying functional data and the second diagnostic image is a late enhancement cardiac magnetic resonance image.

9. A method as in claim 1, **characterized in that**, the first diagnostic image is a cardiac magnetic resonance image displaying tagged data and the second diagnostic image is a late enhancement cardiac magnetic resonance image.

10. A method as in claim 1, **characterized in that**, the first diagnostic image is an ultrasound image displaying first pass data and the second diagnostic image is a late enhancement ultrasound image.

11. A computer program, comprising instructions for the display of images, **characterized in that**, the computer program also comprises instructions to produce a combined image comprising information from a first diagnostic image and from a second diagnostic image by:
- identifying areas indicating a condition of interest in the second diagnostic image,
- registering the first diagnostic image and the second diagnostic image,
- mapping the areas indicating the condition of interest in the second diagnostic image onto equivalent areas in the first diagnostic image,
- **characterized by** the mapping comprising (i) constructing a mask from pixels identified as relating to the areas indicating the condition of interest in the second diagnostic image, and (ii) applying the mask to the first diagnostic image for producing as the combined image the first diagnostic image having the equivalent areas masked out so as to remove said areas from a subsequent analysis of the combined image.

12. An workstation, configured for the purposes of displaying images, **characterized in that**, the workstation also comprises instructions to produce a combined image comprising information from a first diagnostic image and from a second diagnostic image, where areas indicating a condition of interest are identified in the second diagnostic image, where the first diagnostic image and the second diagnostic image are registered, and the areas indicating the condition of interest in the second diagnostic image are mapped onto the equivalent areas in the first diagnostic image, **characterized by** the mapping comprising that (i) a mask is constructed from pixels identified as relating to the areas indicating the condition of interest in the second diagnostic image, and (ii) the mask is applied to the first diagnostic image for producing as the combined image the first diagnostic image having the equivalent areas masked out so as to remove said areas from a subsequent analysis of the combined image.

## Patentansprüche

1. Verfahren zur Erzeugung eines kombinierten Bildes, das Informationen aus einem ersten Diagnosebild und aus einem zweiten Diagnosebild enthält, wobei das Verfahren Folgendes umfasst:
- Identifizieren von Bereichen, die einen interessierenden Zustand in dem zweiten Diagnosebild angeben,
- Registrieren des ersten Diagnosebildes und des zweiten Diagnosebildes,
- Abbilden von Bereichen, die den interessierenden Zustand in dem zweiten Diagnosebild angeben, auf entsprechende Bereiche in dem ersten Diagnosebild,
**dadurch gekennzeichnet, dass**
- das Abbilden Folgendes umfasst:
(i) Konstruieren einer Maske aus Pixeln, die als die Bereiche betreffend identifiziert wurden, die in dem zweiten Diagnosebild den interessierenden Zustand angeben, und
(ii) Anwenden der Maske auf das erste Diagnosebild zum Erzeugen des ersten Diagnosebildes als kombiniertes Bild, in dem die entsprechenden Bereiche ausgeblendet sind, um die genannten Bereiche aus einer anschließenden Analyse des kombinierten Bildes herauszunehmen.

2. Verfahren nach Anspruch 1, **dadurch gekennzeichnet, dass** die Bereiche, die einen interessierenden Zustand angeben, Bereiche mit nekrotischem Gewebe sind.

3. Verfahren nach Anspruch 1, wobei das zweite Diagnosebild Gewebe mit einer Aufnahme eines Kontrastmittels enthält, wobei die Bereiche, die in dem zweiten Diagnosebild einen interessierenden Zustand angeben, Bereiche mit einer gesteigerten Aufnahme des Kontrastmittels sind, und wobei das Verfahren ferner das Identifizieren der genannten Bereiche durch das Identifizieren von Bereichen umfasst, die Pixel enthalten, deren Intensitätswerte zumindest einen Schwellenwert darstellen.

4. Verfahren nach Anspruch 3, **dadurch gekennzeichnet, dass** der Schwellenwert folgendermaßen berechnet wird:
Berechnen eines Histogramms der durch die interessierende Region definierten Pixelwerte, wobei das Histogramm ein erstes signifikantes Maximum der Intensitätswerte zeigt,
Anwenden eines Tiefpassfilters auf das Histogramm,
Berechnen der Intensitätswertes des ersten signifikanten Maximums in dem Histogramm,
Berechnen eines Abweichungswertes für das erste signifikante Maximum,
Berechnen eines Schwellenwertes als Funktion des Intensitätswertes des ersten signifikanten Maximums und des Abweichungswertes.

5. Verfahren nach Anspruch 4, **dadurch gekennzeichnet, dass** der Abweichungswert berechnet wird, indem die absolute Differenz zwischen den Positionswerten des ersten signifikanten Maximums in dem Histogramm und dem Intensitätswert genommen wird, der halb so groß wie der Intensitätswert des ersten signifikanten Maximums ist.

6. Verfahren nach Anspruch 4, **dadurch gekennzeichnet, dass** der Schwellenwert berechnet wird, indem die Summe aus dem Intensitätswert des ersten signifikanten Maximums und zumindest zweimal dem Wert des Abweichungswertes und vorzugsweise 2,5-mal dem Wert des Abweichungswertes genommen wird.

7. Verfahren nach Anspruch 1, **dadurch gekennzeichnet, dass** das erste Diagnosebild ein Magnetresonanz-Herzbild ist, das Perfusionsdaten der ersten Passage (engl. First Pass) anzeigt, und das zweite Diagnosebild ein Magnetresonanzbild der Spätaufnahme (engl. Late Enhancement) des Herzens ist.

8. Verfahren nach Anspruch 1, **dadurch gekennzeichnet, dass** das erste Diagnosebild ein Magnetresonanz-Herzbild ist, das Funktionsdaten zeigt, und das zweite Diagnosebild ein Magnetresonanzbild der Spätaufnahme des Herzens ist.

9. Verfahren nach Anspruch 1, **dadurch gekennzeichnet, dass** das erste Diagnosebild ein Magnetresonanz-Herzbild ist, das getaggte Daten zeigt, und das zweite Diagnosebild ein Magnetresonanzbild der Spätaufnahme des Herzens ist.

10. Verfahren nach Anspruch 1, **dadurch gekennzeichnet, dass** das erste Diagnosebild ein Ultraschallbild ist, das Daten der ersten Passage zeigt, und das zweite Diagnosebild ein Ultraschallbild der Spätaufnahme ist.

11. Computerprogramm mit Befehlen für die Anzeige von Bildern,
**dadurch gekennzeichnet, dass**
das Computerprogramm ferner Befehle umfasst, um ein kombiniertes Bild mit Informationen aus einem ersten Diagnosebild und aus einem zweiten Diagnosebild zu erzeugen durch:
- Identifizieren von Bereichen, die einen interessierenden Zustand in dem zweiten Diagnosebild angeben,
- Registrieren des ersten Diagnosebildes und des zweiten Diagnosebildes,
- Abbilden von Bereichen, die den interessierenden Zustand in dem zweiten Diagnosebild angeben, auf entsprechende Bereiche in dem ersten Diagnosebild,
**dadurch gekennzeichnet, dass**
das Abbilden Folgendes umfasst:
(i) Konstruieren einer Maske aus Pixeln, die als die Bereiche betreffend identifiziert wurden, die in dem zweiten Diagnosebild den interessierenden Zustand angeben, und
(ii) Anwenden der Maske auf das erste Diagnosebild zum Erzeugen des ersten Diagnosebildes als kombiniertes Bild, in dem die entsprechenden Bereiche ausgeblendet sind, um die genannten Bereiche aus einer anschließenden Analyse des kombinierten Bildes herauszunehmen.

12. Workstation, die für den Zweck der Anzeige von Bildern konfiguriert ist, **dadurch gekennzeichnet, dass** die Workstation ferner Befehle zur Erzeugung eines kombinierten Bildes umfasst, das Informationen aus einem ersten Diagnosebild und aus einem zweiten Diagnosebild enthält, wobei Bereiche, die einen interessierenden Zustand angeben, in dem zweiten Diagnosebild identifiziert werden, wobei das erste Diagnosebild und das zweite Diagnosebild registriert werden und Bereiche, die in dem zweiten Diagnosebild den interessierenden Zustand angeben, auf entsprechende Bereiche in dem ersten Diagnosebild abgebildet werden, **dadurch gekennzeichnet, dass** das Abbilden umfasst, dass (i) eine Maske aus Pixeln, die als die Bereiche betreffend identifiziert wurden, die in dem zweiten Diagnosebild den interessierenden Zustand angeben, konstruiert wird und (ii) die Maske auf das erste Diagnosebild angewendet wird, um das erste Diagnosebild als kombiniertes Bild zu erzeugen, in dem die entsprechenden Bereiche ausgeblendet sind, um die genannten Bereiche aus einer anschließenden Analyse des kombinierten Bildes herauszunehmen.

## Revendications

1. Procédé de production d'une image combinée comportant des informations provenant d'une première image diagnostique et d'une seconde image diagnostique, comprenant les phases consistant à :
- identifier dans la seconde image diagnostique les zones indiquant une condition présentant un intérêt,
- enregistrer la première image diagnostique et la seconde image diagnostique,
- mettre en correspondance les zones indiquant une condition présentant un intérêt de la seconde image diagnostique avec les zones équivalentes de la première image diagnostique,
**caractérisé en ce**
**que** ce que la mise en correspondance comprend les étapes consistant à
(i) construire un masque à partir des pixels identifiés comme relatifs aux zones indiquant une condition présentant un intérêt dans le seconde image diagnostique, et
(ii) appliquer le masque à la première image diagnostique afin de produire comme image combinée la première image diagnostique sur laquelle les zones équivalentes sont masquées de sorte que lesdites zones ne sont pas prises en compte lors d'une analyse ultérieure de l'image combinée.

2. Procédé selon la revendication 1, **caractérisé en ce que** les zones indiquant une condition présentant un intérêt sont des zones de tissu nécrotique.

3. Procédé selon la revendication 1, dans lequel la seconde image diagnostique inclut du tissu avec absorption d'un produit de contraste, les zones indiquant une condition présentant un intérêt dans la seconde image diagnostique sont des zones d'absorption accrue de produit de contraste, et le procédé comprend en outre l'étape consistant à identifier lesdites zones en identifiant les zones contenant des pixels possédant des valeurs d'intensité au moins équivalentes à une valeur seuil.

4. Procédé selon la revendication 3, **caractérisé en ce que** la valeur seuil est calculée par :
calcul d'un histogramme de valeurs de pixels définies par la région d'intérêt, ledit histogramme présentant un premier pic significatif des valeurs d'intensité,
application d'un filtre passe-bas,
calcul de la valeur d'intensité du premier pic significatif dans l'histogramme,
calcul d'une valeur d'écart pour le premier pic significatif,
calcul d'une valeur seuil qui est fonction de la valeur d'intensité du premier pic significatif et de la valeur d'écart.

5. Procédé selon la revendication 4, **caractérisé en ce que** la valeur d'écart est calculée en prenant la différence absolue entre les valeurs positionnelles du premier pic significatif dans l'histogramme et la valeur d'intensité étant la moitié de la valeur d'intensité du premier pic significatif.

6. Procédé selon la revendication 4, **caractérisé en ce que** la valeur seuil est calculée en prenant la somme de la valeur d'intensité du premier pic significatif et d'au moins deux fois la valeur de la valeur d'écart, et de préférence 2,5 fois la valeur de la valeur d'écart.

7. Procédé selon la revendication 1, **caractérisé en ce que** la première image diagnostique est une IRM cardiaque affichant les premières données de perfusion de premier passage et la seconde image diagnostique est une IRM cardiaque de rehaussement tardif.

8. Procédé selon la revendication 1, **caractérisé en ce que** la première image diagnostique est une IRM cardiaque affichant des données fonctionnelles et la seconde image diagnostique est une IRM cardiaque de rehaussement tardif.

9. Procédé selon la revendication 1, **caractérisé en ce que** la première image diagnostique est une IRM cardiaque affichant des données taguées et la seconde image diagnostique est une IRM cardiaque de rehaussement tardif.

10. Procédé selon la revendication 1 **caractérisé en ce que** la première image diagnostique est une image ultrasonique affichant les données de premier passage et la seconde image diagnostique est une IRM cardiaque de rehaussement tardif.

11. Logiciel comprenant des instructions pour l'affichage d'images,
**caractérisé en ce que**
le logiciel inclut également des instructions pour produire une image combinée comprenant des informations provenant d'une première image diagnostique et d'une seconde image diagnostique par :
- identification dans la seconde image diagnostique des zones indiquant une condition présentant un intérêt,
- enregistrement de la première image diagnostique et de la seconde image diagnostique,
- mise en correspondance des zones indiquant une condition présentant un intérêt de la seconde image diagnostique avec les zones équivalentes de la première image diagnostique,
**caractérisé en ce que**
ce que la mise en correspondance comprend les étapes consistant à
(i) construire un masque à partir des pixels identifiés comme relatifs aux zones indiquant une condition présentant un intérêt dans le seconde image diagnostique, et
(ii) appliquer le masque à la première image diagnostique afin de produire comme image combinée la première image diagnostique sur laquelle les zones équivalentes sont masquées de sorte que lesdites zones ne sont pas prises en compte lors d'une analyse ultérieure de l'image combinée.

12. Poste de travail configuré aux fins de l'affichage d'images, **caractérisé en ce que** le poste de travail inclut également des instructions pour produire une image combinée comprenant des informations provenant d'une première image diagnostique et d'une seconde image diagnostique, où les zones indiquant une condition présentant un intérêt sont identifiées dans la seconde image diagnostique, où la première image diagnostique et la seconde image diagnostique sont enregistrées, et les zones indiquant une condition présentant un intérêt sont mises en correspondance avec les zones équivalentes de la première image diagnostique, **caractérisé en ce que** la mise en correspondance comprend les étapes consistant à (i) construire un masque à partir des pixels identifiés comme relatifs aux zones indiquant une condition présentant un intérêt dans le seconde image diagnostique, et (ii) appliquer le masque à la première image diagnostique afin de produire comme image combinée la première image diagnostique sur laquelle les zones équivalentes sont masquées de sorte que lesdites zones ne sont pas prises en compte lors d'une analyse ultérieure de l'image combinée.
